# FASCICULE DE BREVET EUROPEEN

(11) **EP 4 662 773 B1**
(45) Date de publication et mention de la délivrance du brevet: **11.11.2026**
(21) Numéro de dépôt: 24703334.3
(22) Date de dépôt: 02.02.2024
(51) Int. Cl.: H02M 1/32, H02M 3/335, H02M 7/162, H02J 7/00, H02J 7/02, B60L 58/20, B60L 3/04, B60L 50/61, B60L 53/22, B60L 3/00

(54) **ETAGE DE CONVERSION DE PUISSANCE ÉLECTRIQUE PROTÉGÉ EN INVERSION BATTERIE, DISPOSITIF DE CHARGE, VÉHICULE AUTOMOBILE ET PROCÉDÉ DE COMMANDE ASSOCIÉS**
BATTERIEUMKEHRGESCHÜTZTE STROMWANDLERSTUFE UND ZUGEHÖRIGE LADEVORRICHTUNG, KRAFTFAHRZEUG UND STEUERUNGSVERFAHREN
BATTERY INVERSION-PROTECTED ELECTRIC POWER CONVERSION STAGE, AND ASSOCIATED CHARGING DEVICE, MOTOR VEHICLE AND CONTROL METHOD

(30) Priorité: 10.02.2023 FR 2301282
(43) Date de publication de la demande: 17.12.2025
(73) Titulaire: RENAULT s.a.s., 92100 Boulogne-Billancourt (FR)
(72) Inventeur: GASCHER, Alain, 78084 Guyancourt cedex (FR)
(74) Mandataire: Renault Group
(86) Numéro de dépôt international: PCT/EP2024/052616
(87) Numéro de publication internationale: WO 2024/165435

(56) Documents cités:
- EP-A2- 1 102 389
- WO-A1-2019/020254
- WO-A1-2023/278972
- RIVERA SEBASTIAN ET AL: "Electric Vehicle Charging Infrastructure: From Grid to Battery", IEEE INDUSTRIAL ELECTRONICS MAGAZINE, IEEE, US, vol. 15, no. 2, 1 February 2021 (2021-02-01), pages 37 - 51, XP011862658, ISSN: 1932-4529, [retrieved on 20210624], DOI: 10.1109/MIE.2020.3039039

## Description

La présente invention concerne les dispositifs de charge de batteries de véhicules automobiles.

La présente invention concerne plus particulièrement un étage de conversion de puissance électrique pour charger une batterie auxiliaire d'un véhicule automobile à propulsion thermique, électrique ou hybride, l'étage de conversion étant réalisé à partir de transistors à effet de champs à hétérostructure réalisés en nitrure de gallium (GaN).

L'invention concerne en outre un chargeur comportant un tel étage de conversion, un véhicule comportant un tel chargeur, et un procédé de commande d'un tel étage de conversion.

Généralement un véhicule automobile à propulsion électrique, hybride ou thermique comprend une batterie auxiliaire ayant par exemple à ses bornes une tension de 14 volts, reliée à un convertisseur de puissance électrique réversible pour charger la batterie.

Le convertisseur comprend généralement un premier étage de conversion relié à une batterie haute tension d'un véhicule à propulsion électrique, ayant par exemple une tension de 400 volts à ses bornes, ou à un alternateur d'un véhicule à propulsion thermique ou à un alternateur démarreur d'un véhicule hybride, et un deuxième étage de conversion relié à la batterie auxiliaire.

Les étages de conversion sont réalisés généralement à partir de transistors à effet de champ à grille métal oxyde connu sous l'acronyme anglosaxon MOSFET « Metal Oxide Semiconductor Field Effect Transistor ».

Les premier et deuxième étages sont reliés entre eux par un transformateur assurant une isolation galvanique entre lesdits étages.

WO 2023/278972 A1 divulgue un convertisseur DC-DC isolé intégrant dans un même ensemble des chargeurs de batteries basse tension et haute tension. Il est notamment indiqué que les transistors FET des redresseurs basse tension peuvent être réalisés sous forme de FET en nitrure de gallium (GaN).

Lorsque la batterie auxiliaire est vide, il est connu de relier directement les bornes de ladite batterie à une batterie auxiliaire fonctionnelle d'un autre véhicule pour charger la batterie auxiliaire vide.

Si les batteries auxiliaires défaillante et fonctionnelle sont reliées entre elles de sorte que des bornes des batteries de polarité opposée sont reliées entre elles (inversion de polarité), un courant de forte intensité circule dans le deuxième étage et rend conductrice une diode interne de faible seuil de chaque transistor MOSFET de sorte que le courant de forte intensité est susceptible de détériorer et détruire les transistors MOSFET du deuxième étage.

Afin d'empêcher la destruction des transistors du deuxième étage lors de la circulation dudit courant, il est connu de relier la borne de polarité négative de la batterie au deuxième étage par l'intermédiaire d'un interrupteur piloté de sorte qu'il est à l'état passant lorsque la tension de la batterie est positive et à l'état ouvert lors de l'inversion de polarité entre les batteries auxiliaires, l'interrupteur comprenant généralement un transistor MOSFET.

WO 2019/020254 A1 divulgue, notamment à la figure 5, un étage secondaire réversible de conversion de puissance électrique comprenant des transistors de protection destinés à protéger les transistors de l'étage contre des surcourants en cas de connexion erronée d'une batterie avec inversion de polarité.

Cependant, l'implémentation de l'interrupteur requiert un espace, des moyens de commande de l'interrupteur détectant une inversion de polarité.

En outre, le transistor MOSFET de l'interrupteur à l'état passant traversé par un courant génère des pertes thermiques.

Il est donc proposé de pallier tout ou partie des inconvénients précités.

Au vu de ce qui précède, l'invention a pour objet un étage de conversion de puissance électrique secondaire réversible comportant au moins deux connexions d'entrée destinées à être reliées à un réseau de tension alternative, au moins deux connexions de sortie destinées à être reliées à une batterie auxiliaire pour véhicule automobile, et au moins deux bras de commutation comprenant chacun une première extrémité reliée à une première connexion de sortie et une deuxième extrémité reliée à une deuxième connexion de sortie, chaque bras de commutation comportant deux transistors à effet de champ à hétérostructure réalisés en nitrure de gallium, le drain d'un premier transistor étant relié à la première extrémité, la source du premier transistor étant reliée au drain du deuxième transistor, la source du deuxième transistor étant reliée à la deuxième extrémité, la source du premier transistor de chaque bras étant en outre reliée à une connexion d'entrée différente des deux connexions d'entrée, et des moyens de blocage.

Les moyens de blocage sont configurés pour appliquer une tension de blocage continue de valeur négative prédéterminée entre la grille et la source de chaque transistor lorsque la tension aux bornes de la batterie auxiliaires est inférieure ou égale à une tension de défaillance prédéterminée, la tension de blocage étant égale à la valeur du potentiel appliqué sur la grille de chaque transistor moins la valeur du potentiel appliqué sur la source dudit transistor.

De préférence, l'étage de conversion de puissance électrique secondaire comporte en outre un filtre comprenant une inductance reliée entre la première extrémité de chaque bras de commutation et la première connexion de sortie, et comprenant un condensateur comportant une première extrémité reliée à la première connexion de sortie et une deuxième extrémité reliée à la deuxième connexion de sortie.

L'invention a également pour objet un véhicule automobile comportant un étage de conversion de puissance électrique secondaire réversible tel que défini précédemment, un réseau de tension alternative relié aux connexions d'entrée, une batterie auxiliaire reliées aux connexions de sortie, et des moyens de mesure de la tension aux bornes de la batterie auxiliaire.

L'invention a également pour objet un dispositif de charge pour batterie auxiliaire d'un véhicule automobile, comportant un étage de conversion de puissance électrique secondaire réversible tel que défini précédemment, l'étage de conversion de puissance électrique secondaire comportant en outre un troisième bras de commutation identique aux premier et deuxième bras de commutation, la première extrémité du troisième bras de commutation étant reliée à la première connexion de sortie et la deuxième extrémité du troisième bras de commutation étant reliée à la deuxième connexion de sortie, la source du premier transistor du troisième bras étant en outre reliée à une troisième connexion d'entrée, chaque connexion d'entrée étant destinée à être reliée à une phase différente d'un alternateur du véhicule automobile formant le réseau de tension alternative.

L'invention a également pour objet véhicule automobile comportant un dispositif de charge tel que défini précédemment, une batterie auxiliaire reliées aux connexions de sortie, un alternateur, et des moyens de mesure de la tension aux bornes de la batterie auxiliaire, chaque phase de l'alternateur étant relié à une connexion d'entrée différente.

L'invention a également pour objet un dispositif de charge pour batterie auxiliaire d'un véhicule automobile, comportant deux bras de commutation comprenant chacun une première extrémité et une deuxième extrémité destinées à être reliées à une borne différente d'une batterie de propulsion et un point de connexion, un transformateur comportant un circuit primaire comprenant deux extrémités reliées chacune à un point de connexion différent et comprenant un circuit secondaire comprenant deux extrémités, et un étage de conversion de puissance électrique secondaire réversible tel que défini précédemment, les connexions d'entrée de l'étage de conversion de puissance électrique secondaire étant reliées chacune à un extrémités différentes du circuit secondaire, et les deux connexions de sortie de l'étage de conversion de puissance électrique secondaire étant destinées à être reliées à la batterie auxiliaire.

L'invention a également pour objet un dispositif de charge pour batterie auxiliaire d'un véhicule automobile, comportant un étage de conversion de puissance électrique primaire réversible comprenant deux bornes de sortie destinées à être reliées à une batterie de propulsion du véhicule automobile et deux points de connexion, un transformateur comportant deux circuits secondaires comprenant chacun deux extrémités, et un étage de conversion de puissance électrique secondaire réversible tel que défini précédemment, chaque extrémité d'un premier circuit secondaire étant reliée à un point de connexion différent et chaque extrémité du deuxième circuit secondaire étant reliée à une connexion d'entrée différente de l'étage de conversion de puissance électrique secondaire, la batterie de propulsion, l'étage de conversion de puissance primaire et le transformateur formant le réseau de tension alternative.

L'invention a également pour objet un véhicule automobile comportant un dispositif de charge tel que défini précédemment, une batterie auxiliaire reliées aux connexions de sortie, une batterie de propulsion reliée aux bornes de sortie, et des moyens de mesure de la tension aux bornes de la batterie auxiliaire.

De préférence, les moyens de mesure comprennent un capteur de tension.

L'invention a également pour objet un procédé de commande d'un étage de conversion de puissance électrique secondaire réversible comportant au moins deux connexions d'entrée reliées à un réseau de tension alternative, au moins deux connexions de sortie reliées à une batterie auxiliaire d'un véhicule automobile, et au moins deux bras de commutation comprenant chacun une première extrémité reliée à une première connexion de sortie et une deuxième extrémité reliée à une deuxième connexion de sortie, chaque bras de commutation comportant deux transistors à effet de champ à hétérostructure réalisé en nitrure de gallium, le drain d'un premier transistor étant relié à la première extrémité, la source du premier transistor étant reliée au drain du deuxième transistor la source du deuxième transistor étant reliée à la deuxième extrémité, la source du premier transistor de chaque bras étant en outre reliée à une connexion d'entrée différente.

Une tension de blocage continue de valeur négative prédéterminée est appliquée entre la grille et la source de chaque transistor lorsque la tension aux bornes de la batterie est inférieure ou égale à une tension de défaillance prédéterminée, la tension de blocage étant égale à la valeur du potentiel appliqué sur la grille de chaque transistor à effet de champs à hétérostructure moins la valeur du potentiel appliqué sur la source dudit transistor.

D'autres buts, caractéristiques et avantages de l'invention apparaîtront à la lecture de la description suivante, donnée uniquement à titre d'exemple non limitatif, et faite en référence aux dessins annexés sur lesquels :
[Fig.1] illustre un véhicule automobile électrique selon l'invention ;
[Fig.2] illustre un premier exemple de réalisation d'un dispositif de charge selon l'invention ;
[Fig.3] illustre un exemple de réalisation d'un étage de conversion de puissance électrique secondaire selon l'invention ;
[Fig.4] illustre un deuxième exemple de réalisation du dispositif de charge selon l'invention ; et
[Fig.5] illustre un véhicule automobile hybride selon l'invention.

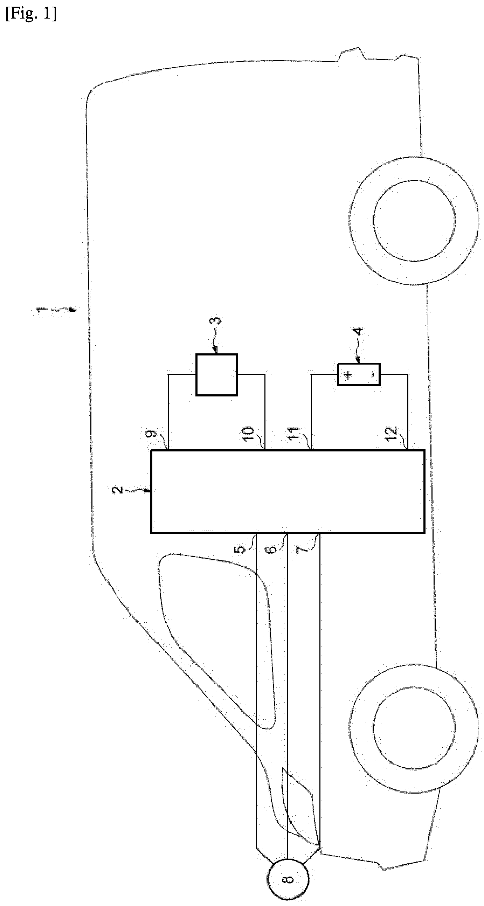

La [Fig.1] illustre un véhicule automobile 1 électrique comprenant un dispositif 2 de charge de batteries, une batterie de propulsion 3 du véhicule 1, et une batterie auxiliaire 4.

La batterie de propulsion 3 alimente un moteur électrique de propulsion (non représenté) du véhicule 1.

Lorsque la batterie auxiliaire 4 est fonctionnelle, la tension à ses bornes est par exemple égale à 14 volts.

Le dispositif 2 comprend des bornes d'entrée 5, 6, 7 reliées à une source 8 de tension d'alimentation triphasé, et des bornes de sortie 9, 10, 11, 12.

Une première et deuxième bornes de sortie 9, 10 sont reliées aux bornes de la batterie de propulsion 3, et une troisième et la quatrième bornes de sortie 11, 12 sont reliées respectivement aux bornes positive et négative de la batterie auxiliaire 4.

Le dispositif 2 charge la batterie de propulsion 3 à partir de la source 8, et charge la batterie auxiliaire 4 à partir de la batterie de propulsion 3.

En variante, le dispositif 2 est alimenté par une source de tension d'alimentation monophasé.

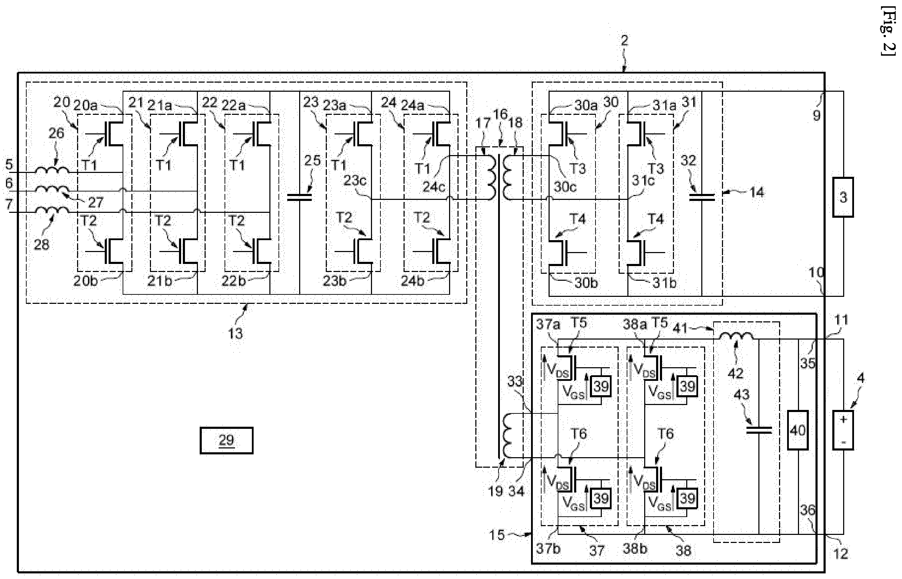

La [Fig.2] illustre un premier exemple de réalisation du dispositif 2 de charge.

Le dispositif 2 comprend un étage d'entrée 13, un étage de conversion de puissance électrique primaire 14 réversible relié à la batterie de propulsion 3, un étage de conversion de puissance électrique secondaire 15 réversible relié à la batterie auxiliaire 4, et un transformateur 16 comportant un circuit primaire 17 et deux circuits secondaires 18, 19.

L'étage d'entrée 13 comprend cinq bras de commutation 20, 21, 22, 23, 24, un condensateur 25 de filtrage et trois inductances 26, 27, 28 de filtrage.

Chaque bras de commutation 20, 21, 22, 23, 24 comprend une première extrémité 20a, 21a, 22a, 23a, 24a reliée à une première extrémité du condensateur 25, et une deuxième extrémité 20b, 21b, 22b, 23b, 24b reliée à une deuxième extrémité du condensateur 25.

Chaque bras de commutation 20, 21, 22, 23, 24 comprend en outre deux transistors T1, T2 identiques à effet de champ, par exemple du type MOSFET.

Le drain d'un premier transistor T1 est relié à la première extrémité 20a, 21a, 22a, 23a, 24a du bras de commutation 20, 21, 22, 23, 24, la source du premier transistor T1 est reliée au drain du deuxième transistor T2, la source du deuxième transistor T2 est reliée à la deuxième extrémité 20b, 21b, 22b, 23b, 24b du bras de commutation 20, 21, 22, 23, 24, et la grille des premiers et deuxièmes transistors T1, T2 est reliée à des moyens de commande du dispositif 2 comportant par exemple une unité de traitement 29.

La source du premier transistor T1 d'un premier bras de commutation 20 est reliée à une première borne d'entrée 5 par l'intermédiaire d'une première inductance 26.

La source du premier transistor T1 d'un deuxième bras de commutation 21 est reliée à une deuxième borne d'entrée 6 par l'intermédiaire d'une deuxième inductance 27.

La source du premier transistor T1 d'un troisième bras de commutation 22 est reliée à la troisième borne d'entrée 7 par l'intermédiaire de la troisième inductance 28.

Un point de connexion 23c entre la source du premier transistor T1 et le drain du deuxième transistor T2 d'un quatrième bras de commutation 23 est relié à une première extrémité du circuit primaire 17, et un point de connexion 24c entre la source du premier transistor T1 et le drain du deuxième transistor T2 du cinquième bras de commutation 24 est relié à une première extrémité du circuit primaire 17.

L'étage de conversion de puissance électrique primaire 14 comprend deux bras de commutation 30, 31 et un condensateur de filtrage 32.

Chaque bras de commutation 30, 31 comprend une première extrémité 30a, 31a reliée à une première extrémité du condensateur 32 et à la première borne de sortie 9, et une deuxième extrémité 30b, 31b reliée à une deuxième extrémité du condensateur 32 et à la deuxième borne de sortie 10.

Chaque bras de commutation 30, 31 comprend en outre deux transistors T3, T4 identiques à effet de champ, par exemple du type MOSFET.

Le drain d'un premier transistor T3 est relié à la première extrémité 30a, 31a du bras de commutation 30, 31, la source du premier transistor T3 est reliée au drain du deuxième transistor T4, la source du deuxième transistor T4 est reliée à la deuxième extrémité 30b, 31b du bras de commutation 30, 31, et la grille des premiers et deuxièmes transistors T3, T4 est reliée à l'unité de traitement 29 du dispositif 2.

Un point de connexion 30c entre la source du premier transistor T3 et le drain du deuxième transistor T3 d'un premier bras de commutation 30 est relié à une première extrémité d'un premier circuit secondaire 18 du transformateur 16, et un point de connexion 31c entre la source du premier transistor T3 et le drain du deuxième transistor T4 du deuxième bras de commutation 31 est relié à une deuxième extrémité du premier circuit secondaire 18.

L'étage de conversion de puissance électrique secondaire 15 comprend deux connexions d'entrée 33, 34 reliées chacune à une extrémité différente du deuxième circuit secondaire 19 du transformateur 16, deux connexions de sortie 35, 36 reliées respectivement aux troisième et quatrième bornes de sortie 11, 12.

L'étage de conversion de puissance électrique secondaire 15 comprend en outre deux bras de commutation 37, 38 comprenant chacun une première extrémité 37a, 38a reliée à une première connexion de sortie 35 et une deuxième extrémité 37b, 38b reliée à une deuxième connexion de sortie 36.

Chaque bras de commutation 37, 38 comporte deux transistors T5, T6 identiques à effet de champ réalisés à hétérostructure en nitrure de gallium GaN.

Le drain d'un premier transistor T5 est relié à la première extrémité 37a, 38a, la source du premier transistor T5 est reliée au drain du deuxième transistor T6, la source du deuxième transistor T6 est reliée à la deuxième extrémité 37b, 38b.

La source du premier transistor T5 du premier bras de commutation 37 est en outre reliée à une première connexion d'entrée 33, et la source du premier transistor T5 du deuxième bras de commutation 38 est en outre reliée à la deuxième connexion d'entrée 34.

L'étage de conversion de puissance électrique secondaire 15 comprend en outre des moyens de blocage 39.

Les moyens de blocage 39 comparent la tension aux bornes de la batterie auxiliaire 4 à une tension de défaillance prédéterminée par exemple égale à 6 volts.

La tension de défaillance prédéterminée est représentative de la défaillance de la batterie 4 de sorte qu'un branchement de la batterie 4 avec une batterie fonctionnelle est probable.

La tension aux bornes de la batterie auxiliaire 4 est relevée par des moyens de mesure comprennent par exemple un capteur de tension 40.

Lorsque la tension aux bornes de la batterie auxiliaire 4 est inférieure ou égale à la tension de défaillance prédéterminée, les moyens de blocage 39 appliquent une tension de blocage continue de valeur négative prédéterminée entre la grille et la source de chaque transistor T5, T6 de l'étage de conversion de puissance électrique secondaire 15.

La tension de blocage est égale à la valeur du potentiel appliqué sur la grille de chaque transistor T5, T6 moins la valeur du potentiel appliqué sur la source dudit transistor T5, T6.

La tension grille source V_{GS} de chaque transistor T5, T6 de l'étage de conversion de puissance électrique secondaire 15 est alors égale à la tension de blocage.

Les transistors GaN T5, T6 soumis à la tension V_{GS} négative se comportent respectivement comme des diodes D5, D6 ayant chacune une tension de seuil supérieure à la tension de seuil de la diode interne d'un transistor MOSFET connu de l'état de la technique, permettant d'empêcher la circulation d'un courant dans les bras de commutation 37, 38 de l'étage de conversion de puissance électrique secondaire 15 lorsqu'une batterie fonctionnelle est reliée avec une inversion de polarité à la batterie auxiliaire 4 défaillante.

Les transistors T5, T6 ne sont pas détériorés ou détruits sans l'ajout d'un interrupteur de protection reliant la batterie 4 à l'étage de conversion de puissance électrique secondaire 15 connu de l'état de la technique lors de l'inversion de polarité.

La suppression de l'interrupteur de protection permet en outre de supprimer les moyens de commande dudit interrupteur et de supprimer les pertes par dissipation thermiques générées par le passage d'un courant dans l'interrupteur.

La suppression de l'interrupteur de protection et des moyens de commande dudit interrupteur permet de libérer de l'espace dans de l'étage de conversion de puissance électrique secondaire 15 pour réduire la taille de l'étage de conversion.

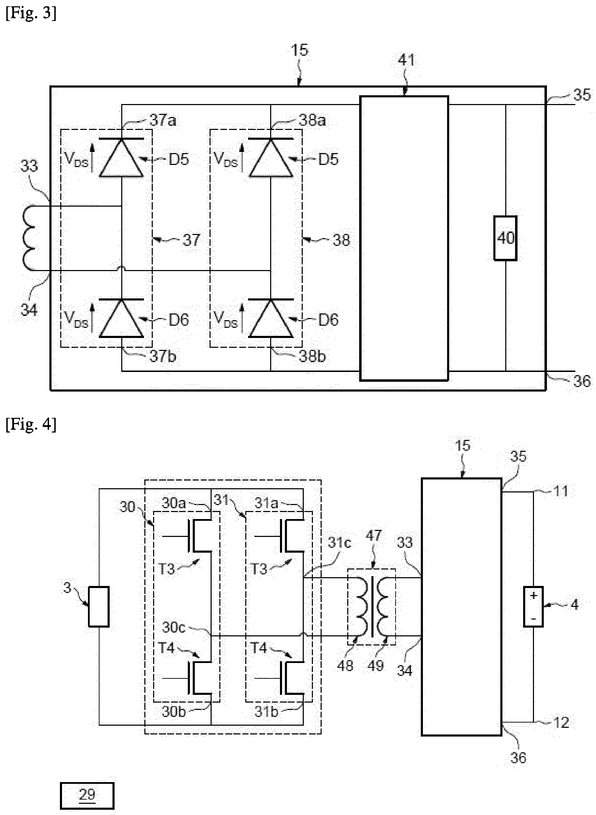

La [Fig.3] illustre schématiquement l'étage de conversion de puissance électrique secondaire 15 lorsque la tension grille source V_{GS} de chaque transistor T5, T6 est égale à la tension de blocage continue.

L'anode de la diode D5 équivalente au transistor T5 lors de l'application de la tension de blocage continue est reliée à la cathode de la diode D6 équivalente au transistor T6 lors de l'application de la tension de blocage continue.

La cathode de la diode D5 est reliée à la première extrémité 37a, 38a.

L'anode de la diode D6 est reliée à la deuxième extrémité 37b, 38b.

Tant que la tension V_{DS} entre le drain et la source de chaque transistor T5, T6 ([Fig.2] ) n'est pas inférieure à un seuil dépendant des caractéristiques du transistor et aucun courant ne circule entre le drain et la source de chaque transistor T5, T6, les transistors T5, T6 sont commandés par la tension :${V}_{GD} = - {V}_{DS} + {V}_{GS}$ (1) où V_{GD} est la tension entre la grille et le drain de chaque transistor T5, T6.

Chaque diode D5, D6 est mise en conduction lorsque${V}_{DS} < - {V}_{th} + {V}_{GS}$ (2) où Vth est la tension de seuil de commande des transistors T5 et T6.

L'application d'une tension de blocage continue de valeur négative permet de modifier le seuil de chaque diode D5, D6 équivalente au transistor T5, T6.

Par exemple si la tension Vgs est égale à -10V et le seuil Vth est égal à 1.5V, chaque diode D5, D6 permet de bloquer une tension égale à -10V+1.5V=-8.5V, les diodes de chaque bras de commutation 37, 38 permettant de bloquer une tension de -17V.

Les moyens de blocage 39 comprennent par exemple une pompe de charge et des moyens de commande pilotant la pompe de charge selon le résultat de la comparaison de la tension aux bornes de la batterie auxiliaire 4 avec la tension de défaillance prédéterminée.

Les moyens de commande comprennent par exemple l'unité de traitement 29.

Tant que la tension aux bornes de la batterie auxiliaire 4 est supérieure à la tension de défaillance prédéterminée, les moyens de blocage 39 n'appliquent pas la tension de blocage entre la grille et la source de chaque transistor T5, T6 de l'étage de conversion de puissance électrique secondaire 15, et en outre si l'étage d'entrée 13 est reliée à la source 8, l'unité de traitement 29 pilote les grilles des transistors T1, T2 de l'étage d'entrée 13 et les grilles des transistors T3, T4 de l'étage de conversion de puissance électrique primaire 14 pour recharger la batterie de propulsion 3 à partir de la source 8.

Lorsque l'étage d'entrée 13 n'est pas relié à la source 8 et que la tension aux bornes de la batterie auxiliaire 4 est supérieure à la tension de défaillance prédéterminée, l'unité de traitement 29 pilote les grilles des transistors T3, T4 de l'étage de conversion de puissance électrique primaire 14 et les grilles des transistors T5, T6 de l'étage de conversion de puissance électrique secondaire 15 pour charger la batterie auxiliaire 4 à partir de la batterie de propulsion 3, la batterie de propulsion 3, l'étage de conversion de puissance primaire 14 et le transformateur 16 formant un réseau de tension alternative.

L'étage de conversion de puissance électrique secondaire 15 peut en outre comprendre un filtre 41 (représenté sur la [Fig.2]) comprenant une inductance 42 reliée entre la première extrémité 37a, 38a de chaque bras de commutation 37, 38 et la première connexion de sortie 35, et un condensateur 43 comportant une première extrémité reliée à la première connexion de sortie 35 et une deuxième extrémité reliée à la deuxième connexion de sortie 36.

La [Fig.4] illustre un deuxième exemple de réalisation du dispositif 2 de charge.

On retrouve la batterie de propulsion 3, l'étage de conversion de puissance électrique secondaire 15, la batterie auxiliaire 4 reliée aux troisième et quatrième bornes de sortie 11, 12, et l'unité de traitement 29.

Le dispositif 2 comprend en outre les bras de commutation 30, 31 de l'étage de conversion de puissance électrique primaire 14, la première extrémité 30a, 31a des bras de commutation 30, 31 étant reliée à une première borne de la batterie de propulsion 3 et la deuxième extrémité 30b, 31b des bras de commutation 30, 31 étant reliée à une deuxième borne de la batterie de propulsion 3. Les points de connexion 30c, 31c des bras 30, 31 sont reliés à une extrémité différente d'un circuit primaire 48 d'un deuxième transformateur 47.

Un circuit secondaire 49 du deuxième transformateur 47 est relié aux connexions d'entrée 33, 34 de l'étage de conversion de puissance électrique secondaire 15.

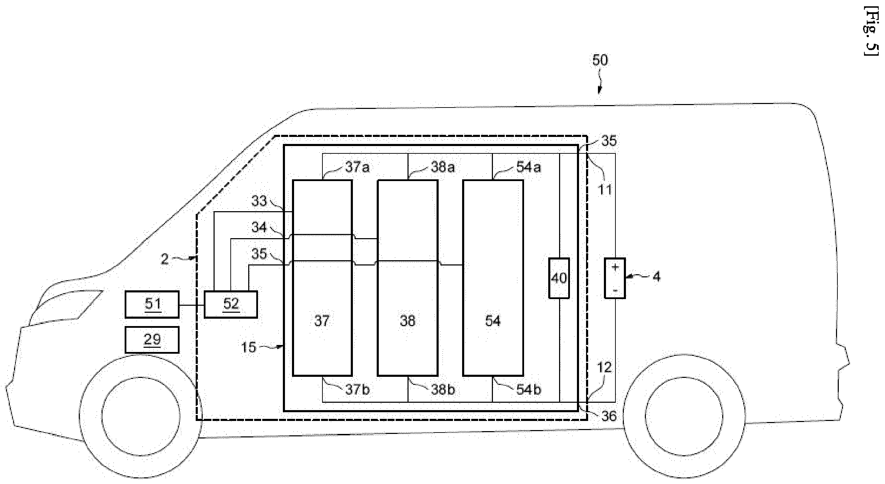

La [Fig.5] illustre un véhicule automobile 50 hybride comprenant un moteur thermique 51, un alternateur démarreur 52 relié mécaniquement audit moteur 51, et un autre mode de réalisation du dispositif 2 comportant un autre mode de réalisation de l'étage de conversion de puissance électrique secondaire 15, la batterie auxiliaire 4 reliée aux deux connexions de sortie 35, 36, et l'unité de traitement 29.

L'étage de conversion de puissance électrique secondaire 15 comprend autant de connexions d'entrée 33, 34, 53 que de phases de l'alternateur démarreur 52.

On suppose que l'alternateur démarreur 52 est du type triphasé.

L'étage de conversion de puissance électrique secondaire 15 comprend les bras de commutation 37, 38 et le capteur 40 reliés comme décrits précédemment.

L'étage de conversion de puissance électrique secondaire 15 comprend en outre un troisième bras de commutation 54 identique aux bras de commutation 37, 38 comportant une première extrémité 54a reliée à la première connexion de sortie 35 et une deuxième extrémité 54b reliée à la deuxième connexion de sortie 36.

La source du premier transistor T5 du troisième bras de commutation 54 est reliée à la troisième connexion d'entrée 53.

Tant que la tension aux bornes de la batterie 4 est supérieure à la tension de défaillance prédéterminée, l'unité de traitement 29 pilote les grilles des transistors T5, T6 des bras de commutation 37, 38, 54 de sorte que l'alternateur démarreur 52 recharge la batterie 4 lorsque le moteur 51 fonctionne ou de sorte que la batterie 4 alimente l'alternateur démarreur 52 pour démarrer le moteur 51 lorsqu'il est à l'arrêt.

Lorsque la tension aux bornes de la batterie 4 est inférieure à la tension de défaillance prédéterminée, les moyens de blocage 39 appliquent la tension de blocage sur chaque transistor T5, T6 des bras de commutation 37, 38, 54.

En variante, l'alternateur démarreur 52 est remplacé par un alternateur, le véhicule étant un véhicule à propulsion thermique.

## Revendications

1. Etage de conversion de puissance électrique secondaire (15) réversible comportant au moins deux connexions d'entrée (33, 34) destinées à être reliées à un réseau de tension alternative (16, 47, 52), au moins deux connexions de sortie (35, 36) destinées à être reliées à une batterie auxiliaire (4) pour véhicule automobile (1, 50), et au moins deux bras de commutation (37, 38) comprenant chacun une première extrémité (37a, 38a) reliée à une première connexion de sortie (35) et une deuxième extrémité (37b, 38b) reliée à une deuxième connexion de sortie (36), chaque bras de commutation comportant deux transistors (T5, T6) à effet de champ à hétérostructure réalisés en nitrure de gallium, le drain d'un premier transistor (T5) étant relié à la première extrémité, la source du premier transistor (T5) étant reliée au drain du deuxième transistor (T6), la source du deuxième transistor (T6) étant reliée à la deuxième extrémité, la source du premier transistor (T5) de chaque bras étant en outre reliée à une connexion d'entrée différente des deux connexions d'entrée (33, 34), et des moyens de blocage (39), **caractérisé en ce que** les moyens de blocage (39) sont configurés pour appliquer une tension de blocage continue de valeur négative prédéterminée entre la grille et la source de chaque transistor (T5, T6) lorsque la tension aux bornes de la batterie auxiliaire (4) est inférieure ou égale à une tension de défaillance prédéterminée, la tension de blocage étant égale à la valeur du potentiel appliqué sur la grille de chaque transistor (T5, T6) moins la valeur du potentiel appliqué sur la source dudit transistor (T5, T6).

2. Etage de conversion de puissance électrique secondaire selon la revendication 1, comportant en outre un filtre (41) comprenant une inductance (42) reliée entre la première extrémité (37a, 38b) de chaque bras de commutation (37, 38) et la première connexion de sortie (35), et comprenant un condensateur (43) comportant une première extrémité reliée à la première connexion de sortie (35) et une deuxième extrémité reliée à la deuxième connexion de sortie (36).

3. Dispositif (2) de charge pour batterie auxiliaire (4) d'un véhicule automobile (1, 50), comportant un étage de conversion de puissance électrique secondaire (15) réversible selon l'une des revendications 1 ou 2, l'étage de conversion de puissance électrique secondaire comportant en outre un troisième bras de commutation (54) identique aux premier et deuxième bras de commutation (37, 38), la première extrémité (54a) du troisième bras de commutation étant reliée à la première connexion de sortie (35) et la deuxième extrémité (54b) du troisième bras de commutation étant reliée à la deuxième connexion de sortie (36), la source du premier transistor (T5) du troisième bras étant en outre reliée à une troisième connexion d'entrée (53), chaque connexion d'entrée étant destinée à être reliée à une phase différente d'un alternateur (52) du véhicule automobile formant le réseau de tension alternative.

4. Dispositif de charge pour batterie auxiliaire d'un véhicule automobile (1), comportant deux bras de commutation (30, 31) comprenant chacun une première extrémité (30a, 31a) et une deuxième extrémité (30b, 31b) destinées à être reliées à une borne différente d'une batterie de propulsion (3) et un point de connexion (30c, 31c), un transformateur (47) comportant un circuit primaire (48) comprenant deux extrémités reliées chacune à un point de connexion différent et comprenant un circuit secondaire (49) comprenant deux extrémités, et un étage de conversion de puissance électrique secondaire (15) réversible selon l'une des revendications 1 ou 2, les connexions d'entrée (33, 34) de l'étage de conversion de puissance électrique secondaire (15) étant reliées chacune à un extrémités différentes du circuit secondaire (49), et les deux connexions de sortie (35, 36) de l'étage de conversion de puissance électrique secondaire (15) étant destinées à être reliées à la batterie auxiliaire (4).

5. Dispositif de charge pour batterie auxiliaire d'un véhicule automobile (1), comportant un étage de conversion de puissance électrique primaire (14) réversible comprenant deux bornes de sortie (9, 10) destinées à être reliées à une batterie de propulsion (3) du véhicule automobile et deux points de connexion (30c, 31c), un transformateur (16) comportant deux circuits secondaires (18, 19) comprenant chacun deux extrémités, et un étage de conversion de puissance électrique secondaire (15) réversible selon l'un des revendications 1 ou 2, chaque extrémité d'un premier circuit secondaire (18) étant reliée à un point de connexion (30c, 31c) différent et chaque extrémité du deuxième circuit secondaire (19) étant reliée à une connexion d'entrée (33, 34) différente de l'étage de conversion de puissance électrique secondaire (15), la batterie de propulsion, l'étage de conversion de puissance primaire et le transformateur formant le réseau de tension alternative.

6. Véhicule automobile comportant un étage de conversion de puissance électrique secondaire réversible selon l'un des revendications 1 ou 2, un réseau de tension alternative (8) relié aux connexions d'entrée (33, 34), une batterie auxiliaire (4) reliées aux connexions de sortie (35, 36), et des moyens de mesure de la tension aux bornes de la batterie auxiliaire (4).

7. Véhicule automobile comportant un dispositif de charge selon la revendication 3, une batterie auxiliaire (4) reliées aux connexions de sortie (35, 36), un alternateur (52), et des moyens de mesure de la tension aux bornes de la batterie auxiliaire, chaque phase de l'alternateur étant relié à une connexion d'entrée différente.

8. Véhicule automobile comportant un dispositif de charge selon l'une des revendications 4 ou 5, une batterie auxiliaire (4) reliées aux connexions de sortie (35, 36), une batterie de propulsion (3) reliée aux bornes de sortie (9, 10), et des moyens de mesure de la tension aux bornes de la batterie auxiliaire.

9. Véhicule automobile selon l'une des revendications 6 à 8, dans lequel les moyens de mesure comprennent un capteur de tension (40).

10. Procédé de commande d'un étage de conversion de puissance électrique secondaire réversible comportant au moins deux connexions d'entrée (33, 34) reliées à un réseau de tension alternative, au moins deux connexions de sortie (35, 36) reliées à une batterie auxiliaire (4) d'un véhicule automobile (1, 50), et au moins deux bras de commutation (37, 38) comprenant chacun une première extrémité (37a, 38a) reliée à une première connexion de sortie (35) et une deuxième extrémité (37b, 38b) reliée à une deuxième connexion de sortie (36), chaque bras de commutation comportant deux transistors (T5, T6) à effet de champ à hétérostructure réalisé en nitrure de gallium, le drain d'un premier transistor (T5) étant relié à la première extrémité, la source du premier transistor (T5) étant reliée au drain du deuxième transistor (T6), la source du deuxième transistor (T6) étant reliée à la deuxième extrémité, la source du premier transistor (T5) de chaque bras étant en outre reliée à une connexion d'entrée différente, **caractérisé en ce qu'**une tension de blocage continue de valeur négative prédéterminée est appliquée entre la grille et la source de chaque transistor (T5, T6) lorsque la tension aux bornes de la batterie est inférieure ou égale à une tension de défaillance prédéterminée, la tension de blocage étant égale à la valeur du potentiel appliqué sur la grille de chaque transistor à effet de champs à hétérostructure moins la valeur du potentiel appliqué sur la source dudit transistor.

## Patentansprüche

1. Reversible sekundäre Stromwandlungsstufe (15), welche mindestens zwei Eingangsanschlüsse (33, 34), die dazu bestimmt sind, mit einem Wechselspannungsnetz (16, 47, 52) verbunden zu werden, mindestens zwei Ausgangsanschlüsse (35, 36), die dazu bestimmt sind, mit einer Hilfsbatterie (4) für ein Kraftfahrzeug (1, 50) verbunden zu werden, und mindestens zwei Schaltarme (37, 38), die jeweils ein mit einem ersten Ausgangsanschluss (35) verbundenes erstes Ende (37a, 38a) und ein mit einem zweiten Ausgangsanschluss (36) verbundenes zweites Ende (37b, 38b) umfassen, aufweist, wobei jeder Schaltarm zwei Heterostruktur-Feldeffekttransistoren (T5, T6) aus Galliumnitrid aufweist, der Drain des ersten Transistors (T5) mit dem ersten Ende verbunden ist, die Source des ersten Transistors (T5) mit dem Draim des zweiten Transistors (T6) verbunden ist und die Source des zweiten Transistors (T6) mit dem zweiten Ende verbunden ist, wobei die Source des ersten Transistors (T5) jedes Armes außerdem mit einem anderen Eingangsanschluss von den zwei Eingangsanschlüssen (33, 34) und mit Sperrmitteln (39) verbunden ist, **dadurch gekennzeichnet, dass** die Sperrmittel (39) dafür ausgelegt sind, eine Sperrgleichspannung mit einem vorbestimmten negativen Wert zwischen dem Gate und der Source jedes Transistors (T5, T6) anzulegen, wenn die Spannung an den Klemmen der Hilfsbatterie (4) niedriger als eine oder gleich einer vorbestimmten Ausfallspannung ist, wobei die Sperrspannung gleich dem Wert des an das Gate jedes Transistors (T5, T6) angelegten Potentials abzüglich des Wertes des an die Source dieses Transistors (T5, T6) angelegten Potentials ist.

2. Sekundäre Stromwandlungsstufe nach Anspruch 1, welche außerdem ein Filter (41) aufweist, das eine zwischen das erste Ende (37a, 38b) jedes Schaltarmes (37, 38) und den ersten Ausgangsanschluss (35) geschaltete Induktivität (42) umfasst und einen Kondensator (43) umfasst, der ein mit dem ersten Ausgangsanschluss (35) verbundenes erstes Ende und ein mit dem zweiten Ausgangsanschluss (36) verbundenes zweites Ende aufweist.

3. Ladevorrichtung (2) für eine Hilfsbatterie (4) eines Kraftfahrzeugs (1, 50), welche eine reversible sekundäre Stromwandlungsstufe (15) nach einem der Ansprüche 1 oder 2 aufweist, wobei die sekundäre Stromwandlungsstufe außerdem einen dritten Schaltarm (54) aufweist, der mit dem ersten und dem zweiten Schaltarm (37, 38) identisch ist, wobei das erste Ende (54a) des dritten Schaltarmes mit dem ersten Ausgangsanschluss (35) verbunden ist und das zweite Ende (54b) des dritten Schaltarmes mit dem zweiten Ausgangsanschluss (36) verbunden ist, wobei die Source des ersten Transistors (T5) des dritten Schaltarmes außerdem mit einem dritten Eingangsanschluss (53) verbunden ist, wobei jeder Eingangsanschluss dazu bestimmt ist, mit einer anderen Phase eines Wechselstromgenerators (52) des Kraftfahrzeugs verbunden zu werden, der das Wechselspannungsnetz bildet.

4. Ladevorrichtung für eine Hilfsbatterie eines Kraftfahrzeugs (1), welche zwei Schaltarme (30, 31), die jeweils ein erstes Ende (30a, 31a) und ein zweites Ende (30b, 31b) umfassen, die dazu bestimmt sind, jeweils mit einer anderen Klemme einer Antriebsbatterie (3) und einem Anschlusspunkt (30c, 31c) verbunden zu werden, einen Transformator (47), der einen Primärkreis (48), der zwei jeweils mit einem anderen Anschlusspunkt verbundene Enden umfasst und einen zwei Enden umfassenden Sekundärkreis (49) umfasst, und eine reversible sekundäre Stromwandlungsstufe (15) nach einem der Ansprüche 1 oder 2 aufweist, wobei die Eingangsanschlüsse (33, 34) der sekundären Stromwandlungsstufe (15) jeweils mit einem anderen Ende des Sekundärkreises (49) verbunden sind und die zwei Ausgangsanschlüsse (35, 36) der sekundären Stromwandlungsstufe (15) dazu bestimmt sind, mit der Hilfsbatterie (4) verbunden zu werden.

5. Ladevorrichtung für eine Hilfsbatterie eines Kraftfahrzeugs (1), welche eine reversible primäre Stromwandlungsstufe (14), die zwei Ausgangsklemmen (9, 10), die dazu bestimmt sind, mit einer Antriebsbatterie (3) des Kraftfahrzeugs verbunden zu werden, und zwei Anschlusspunkte (30c, 31c) umfasst, einen Transformator (16), der zwei jeweils zwei Enden umfassende Sekundärkreise (18, 19) aufweist, und eine reversible sekundäre Stromwandlungsstufe (15) nach einem der Ansprüche 1 oder 2 aufweist, wobei jedes Ende eines ersten Sekundärkreises (18) mit einem anderen Anschlusspunkt (30c, 31c) verbunden ist und jedes Ende des zweiten Sekundärkreises (19) mit einem anderen Eingangsanschluss (33, 34) der sekundären Stromwandlungsstufe (15) verbunden ist, wobei die Antriebsbatterie, die primäre Stromwandlungsstufe und der Transformator das Wechselspannungsnetz bilden.

6. Kraftfahrzeug, welches eine reversible sekundäre Stromwandlungsstufe nach einem der Ansprüche 1 oder 2, ein mit den Eingangsanschlüssen (33, 34) verbundenes Wechselspannungsnetz (8), eine mit den Ausgangsanschlüssen (35, 36) verbundene Hilfsbatterie (4) und Messmittel für die Spannung an den Klemmen der Hilfsbatterie (4) aufweist.

7. Kraftfahrzeug, welches eine Ladevorrichtung nach Anspruch 3, eine mit den Ausgangsanschlüssen (35, 36) verbundene Hilfsbatterie (4), einen Wechselstromgenerator (52) und Messmittel für die Spannung an den Klemmen der Hilfsbatterie aufweist, wobei jede Phase des Wechselstromgenerators mit einem anderen Eingangsanschluss verbunden ist.

8. Kraftfahrzeug, welches eine Ladevorrichtung nach einem der Ansprüche 4 oder 5, eine mit den Ausgangsanschlüssen (35, 36) verbundene Hilfsbatterie (4), eine mit den Ausgangsklemmen (9, 10) verbundene Antriebsbatterie (3) und Messmittel für die Spannung an den Klemmen der Hilfsbatterie aufweist.

9. Kraftfahrzeug nach einem der Ansprüche 6 bis 8, wobei die Messmittel einen Spannungssensor (40) umfassen.

10. Verfahren zur Steuerung einer reversiblen sekundären Stromwandlungsstufe, die mindestens zwei Eingangsanschlüsse (33, 34), die mit einem Wechselspannungsnetz verbunden sind, mindestens zwei Ausgangsanschlüsse (35, 36), die mit einer Hilfsbatterie (4) eines Kraftfahrzeugs (1, 50) verbunden sind, und mindestens zwei Schaltarme (37, 38), die jeweils ein mit einem ersten Ausgangsanschluss (35) verbundenes erstes Ende (37a, 38a) und ein mit einem zweiten Ausgangsanschluss (36) verbundenes zweites Ende (37b, 38b) umfassen, aufweist, wobei jeder Schaltarm zwei Heterostruktur-Feldeffekttransistoren (T5, T6) aus Galliumnitrid aufweist, der Drain des ersten Transistors (T5) mit dem ersten Ende verbunden ist, die Source des ersten Transistors (T5) mit dem Draim des zweiten Transistors (T6) verbunden ist und die Source des zweiten Transistors (T6) mit dem zweiten Ende verbunden ist, wobei die Source des ersten Transistors (T5) jedes Armes außerdem mit einem anderen Eingangsanschluss verbunden ist, **dadurch gekennzeichnet, dass** eine Sperrgleichspannung mit einem vorbestimmten negativen Wert zwischen dem Gate und der Source jedes Transistors (T5, T6) angelegt wird, wenn die Spannung an den Klemmen der Batterie niedriger als eine oder gleich einer vorbestimmten Ausfallspannung ist, wobei die Sperrspannung gleich dem Wert des an das Gate jedes Heterostruktur-Feldeffekttransistors angelegten Potentials abzüglich des Wertes des an die Source dieses Transistors angelegten Potentials ist.

## Claims

1. Reversible secondary electric power conversion stage (15) comprising at least two input connections (33, 34) intended to be connected to an AC voltage network (16, 47, 52), at least two output connections (35, 36) intended to be connected to an auxiliary battery (4) for a motor vehicle (1, 50), and at least two switching arms (37, 38) each comprising a first end (37a, 38a) connected to a first output connection (35) and a second end (37b, 38b) connected to a second output connection (36), each switching arm comprising two heterostructure field-effect transistors (T5, T6) made of gallium nitride, the drain of a first transistor (T5) being connected to the first end, the source of the first transistor (T5) being connected to the drain of the second transistor (T6), the source of the second transistor (T6) being connected to the second end, the source of the first transistor (T5) of each arm furthermore being connected to a different input connection of the two input connections (33, 34), and blocking means (39), **characterized in that** the blocking means (39) are configured to apply a DC blocking voltage having a predetermined negative value between the gate and the source of each transistor (T5, T6) when the voltage across the terminals of the auxiliary battery (4) is equal to or less than a predetermined fault voltage, the blocking voltage being equal to the value of the potential applied to the gate of each transistor (T5, T6) minus the value of the potential applied to the source of said transistor (T5, T6).

2. Secondary electric power conversion stage according to Claim 1, furthermore comprising a filter (41) comprising an inductor (42) connected between the first end (37a, 38b) of each switching arm (37, 38) and the first output connection (35), and comprising a capacitor (43) comprising a first end connected to the first output connection (35) and a second end connected to the second output connection (36).

3. Charging device (2) for an auxiliary battery (4) of a motor vehicle (1, 50), comprising a reversible secondary electric power conversion stage (15) according to either of Claims 1 and 2, the secondary electric power conversion stage furthermore comprising a third switching arm (54) identical to the first and second switching arms (37, 38), the first end (54a) of the third switching arm being connected to the first output connection (35) and the second end (54b) of the third switching arm being connected to the second output connection (36), the source of the first transistor (T5) of the third arm furthermore being connected to a third input connection (53), each input connection being intended to be connected to a different phase of an alternator (52) of the motor vehicle forming the AC voltage network.

4. Charging device for an auxiliary battery of a motor vehicle (1), comprising two switching arms (30, 31) each comprising a first end (30a, 31a) and a second end (30b, 31b) intended to be connected to a different terminal of a propulsion battery (3) and a connection point (30c, 31c), a transformer (47) comprising a primary circuit (48) comprising two ends each connected to a different connection point and comprising a secondary circuit (49) comprising two ends, and a reversible secondary electric power conversion stage (15) according to either of Claims 1 and 2, the input connections (33, 34) of the secondary electric power conversion stage (15) each being connected to different ends of the secondary circuit (49), and the two output connections (35, 36) of the secondary electric power conversion stage (15) being intended to be connected to the auxiliary battery (4).

5. Charging device for an auxiliary battery of a motor vehicle (1), comprising a reversible primary electric power conversion stage (14) comprising two output terminals (9, 10) intended to be connected to a propulsion battery (3) of the motor vehicle and two connection points (30c, 31c), a transformer (16) comprising two secondary circuits (18, 19) each comprising two ends, and a reversible secondary electric power conversion stage (15) according to either of Claims 1 and 2, each end of a first secondary circuit (18) being connected to a different connection point (30c, 31c) and each end of the second secondary circuit (19) being connected to a different input connection (33, 34) of the secondary electric power conversion stage (15), the propulsion battery, the primary power conversion stage and the transformer forming the AC voltage network.

6. Motor vehicle comprising a reversible secondary electric power conversion stage according to either of Claims 1 and 2, an AC voltage network (8) connected to the input connections (33, 34), an auxiliary battery (4) connected to the output connections (35, 36), and means for measuring the voltage across the terminals of the auxiliary battery (4).

7. Motor vehicle comprising a charging device according to Claim 3, an auxiliary battery (4) connected to the output connections (35, 36), an alternator (52), and means for measuring the voltage across the terminals of the auxiliary battery, each phase of the alternator being connected to a different input connection.

8. Motor vehicle comprising a charging device according to either of Claims 4 and 5, an auxiliary battery (4) connected to the output connections (35, 36), a propulsion battery (3) connected to the output terminals (9, 10), and means for measuring the voltage across the terminals of the auxiliary battery.

9. Motor vehicle according to one of Claims 6 to 8, wherein the measuring means comprise a voltage sensor (40).

10. Method for controlling a reversible secondary electric power conversion stage comprising at least two input connections (33, 34) connected to an AC voltage network, at least two output connections (35, 36) connected to an auxiliary battery (4) of a motor vehicle (1, 50), and at least two switching arms (37, 38) each comprising a first end (37a, 38a) connected to a first output connection (35) and a second end (37b, 38b) connected to a second output connection (36), each switching arm comprising two heterostructure field-effect transistors (T5, T6) made of gallium nitride, the drain of a first transistor (T5) being connected to the first end, the source of the first transistor (T5) being connected to the drain of the second transistor (T6), the source of the second transistor (T6) being connected to the second end, the source of the first transistor (T5) of each arm furthermore being connected to a different input connection, **characterized in that** a DC blocking voltage having a predetermined negative value is applied between the gate and the source of each transistor (T5, T6) when the voltage across the terminals of the battery is less than or equal to a predetermined fault voltage, the blocking voltage being equal to the value of the potential applied to the gate of each heterostructure field-effect transistor minus the value of the potential applied to the source of said transistor.
